# EUROPEAN PATENT SPECIFICATION

(11) **EP 3 171 702 B1**
(45) Date of publication and mention of the grant of the patent: **17.10.2018**
(21) Application number: 15736493.6
(22) Date of filing: 10.07.2015
(51) Int. Cl.: A23L 5/10, A23D 7/005, A23D 7/01

(54) **COOKING-AID FOR COATING AND FRYING A FOOD PRODUCT AND METHOD FOR MAKING SAID COOKING-AID**
KOCHHILFE ZUM BESCHICHTEN UND BRATEN EINES NAHRUNGSMITTELPRODUKTS UND VERFAHREN ZUR HERSTELLUNG DIESER KOCHHILFE
AIDE DE CUISINE PERMETTANT DE RECOUVRIR ET DE FRIRE UN PRODUIT ALIMENTAIRE ET PROCÉDÉ DE FABRICATION DUDIT AIDE DE CUISINE

(30) Priority: 24.07.2014 EP 14178343
(43) Date of publication of application: 31.05.2017
(73) Proprietor: Nestec S.A., 1800 Vevey (CH)
(72) Inventor: WONG, Xin Yu, Singapore 750425 (SG); NG, Yun Ting Sherrilyn, Singapore 120112 (SG)
(74) Representative: Mollet, Beat Max
(86) International application number: PCT/EP2015/065786
(87) International publication number: WO 2016/012263

(56) References cited:
- EP-A1- 2 589 298
- EP-A2- 0 537 126
- EP-A2- 0 664 962
- WO-A1-94/12039
- US-A- 4 375 484
- US-A- 4 504 509
- US-A- 6 056 984

## Description

The present invention relates to a shelf-stable cooking-aid for coating and frying a food product in one step for example in a heating pan. Further aspects of the invention are the method for making said cooking-aid as well as a method for coating and frying a food product in a pan or heated surface. Deep-frying often involves batter-coating comestibles such as meat, fish, poultry and vegetables. Batters enhance the sensory qualities of a food by forming a desirable crispy crust or coat upon frying. Unfortunately, however, this often involves a multi-step process of marinating the food product first, battering and then frying the product typically in an oil bath or in hot oil in a heating pan. Not only is the method tedious and time consuming for preparing fried foods, the large amount of oil used also contributes to an overall increased fat and oil content of the fried food product. Furthermore, this traditionally well-known process of coating and frying food products typically results also in a lot of oil splattering and smoke formation in a kitchen which usually requires a lot of cleaning thereafter by a consumer, for example in his home kitchen.
Many compositions which can be used as a batter for providing a crispy crust or coat to a food product are known. Thereby, it is for example known that high amylose starches can give crispiness, and the use of a combination of starches together with flours in batters can enhance the texture of food products. For example, WO 02/49461 describes such a batter composition comprising starch, dextrin and rice flour for coating par-fried products with crunchy coating of extended holding time. WO 00/28828 also relates to an improved clear coat batter to produce par-fried and frozen French fry strips with improved crispiness and reduced toughness, by using combinations of potato starch, tapioca starch, corn starch, rice flour and dextrins. However, these documents describe solely a batter system that will be used for a subsequent par-frying or deep-frying step of a food product, where for example oil or fat can be used for the frying of said food product.

US4375484 relates to an aqueous coating batter composition, said batter being capable of extended storage in the frozen state followed by 40°F storage for at least 14 days without the formation of sugar or growth of bacteria and said batter containing, all percentages being by weight of the batter composition: (a) a continuous aqueous phase comprising from 20 to 85% water, from 3 to 30% flour which has been heat treated under conditions effective to eliminate substantially all viable micro-organisms and to inactivate enzyme activity, from 1 to 20% of a starch, an amount of a gum effective to thicken the batter and provide a crisp mixture upon cooking, from 0.02 to 1.0% of food preservatives and from 0.005 to 1.0% of oleoresins extracted from natural spices; and, (b) a discontinuous fat phase comprising from 0.3 to 55% of a fat and from 0.025 to 10% of an emulsifier. The starch can be of a wide variety of types, such as raw, pregelatinized and/or modified, and from a number of sources such as corn starch, arrowroot starch, waxy maize starch, tapioca starch, etc., and combinations thereof. Preferred among these starches are the pregelatinized modified starches such as pregelatinized modified corn starch. Among the suitable fats are those derived from vegetable and animal sources. It is preferred to employ those from vegetable sources such as soybean oil, corn oil, safflower oil, cottonseed oil, sunflower oil, palm oil, coconut oil, peanut oil, and the like. These oils may be in their pure liquid form or can be partially or totally hydrogenated. EP0664962 relates to a batter for application to a material for frying comprising edible oils and fats, water, an edible moisture holding material, a foaming agent, and an emulsion stabilizer. US4504509 relates to an aseptically processed liquid batter for use in coating foodstuffs prior to cooking, said batter comprising 20-60% water, 10-35% of starch, 10-35% of maltose-free starch dextrin, 5-25% of oil, 0.3-3.0% of emulsifier, 0.1-3.0% of yeast, and 5-20% of maltodextrin. Furthermore, documents on cooking aids and food preparation compositions such as US6403144 describe food preparation compositions comprising an anti-stick agent, a flavour enhancing agent and an anti-foaming agent that can be used to prepare food, yet provide improved flavour, texture and aroma. WO 04/016090 describes a coating fat composition for producing a fry-like food without frying in oil. The fat composition is obtained by adding to a fat an agent capable of lowering the contact angle measured at ordinary temperature. However, these documents all fail to disclose a method for crispy coating a food product at a same time as frying it. Hence, such final cooked foods do not have a crispy coated crust after the frying.
Hence, the identified prior art either describes a batter to be applied for par-frying or deep-frying a food product thereafter, or they describe oil compositions for frying but not coating a food product. There appears to be no prior art which describes the key benefit of an all-in-one cooking aid which combines coating and frying in one single step, which is easy and convenient to handle by a consumer, e.g. in his home kitchen, and which delivers a crispy coated pan-fried product. Hence, there is a persisting need in the art and food industry to provide a better solution for a consumer for directly coating and frying a food product e.g. in his or her kitchen, the solution being more convenient for use than the solutions presently on the market, and preventing for example unnecessary splattering of oil during the frying step.

### Summary of the invention

The object of the present invention is to improve the state of the art and to provide a more convenient and clean solution for coating and frying a food product for example in a heating pan in preferably only one single manipulation step by a user. The object of the present invention is achieved by the subject matter of the independent claims. The dependent claims further develop the idea of the present invention.

Accordingly, the present invention provides in a first aspect a shelf-stable cooking aid for coating and frying a food product, the cooking aid comprising: 25-40 wt% oil, 35-65 wt% water, 10-25 wt% flour and/or starch, an emulsifier; wherein the oil and water are in the form of an emulsion and wherein the oil is liquid at a room temperature of 25°C.

In a second aspect, the invention relates to a method for making the shelf-stable cooking aid of the present invention, comprising the steps of:
a) dissolving emulsifier in oil and mixing with water to form an emulsion;
b) mixing the flour and/or starch with water;
c) admixing oil and emulsifier to the mixture of step b) to form a blend;
d) pasteurizing the blend from step c) at a temperature of at least 65°C, preferably at least 75°C, more preferably at least 80°C;
e) mixing the emulsion from step a) with the pasteurized blend from step d) and filling the resulting cooking aid into packaging containers;
wherein the total amount of water from the different method steps adds up to 35-65 wt% of the cooking aid; and wherein the total amount of oil from the different method steps adds up to 25-40 wt% of the cooking aid.

A third aspect of the invention relates to a method for coating and frying a food product in one single manipulation step, wherein the food product is brought into contact with and heated together with the cooking aid of the present invention in a heating pan or on a heated surface.

It has been surprisingly found by the inventors that when combining an emulsion between water and oil in a very specific ratio with a specific predetermined amount of a flour and/or starch mix, a composition can be obtained which, preferably in the form of a paste, well binds to food products and upon direct frying of said food products in a heating pan or on a heating surface provides them with a nice crispy coating. No additional oil or fat has to be added to the food product for frying, e.g. when battering the food product first with the present composition, as the composition, i.e. the cooking aid of the present invention, already comprises enough oil for that frying step. The fact that the oil is embedded in a pasty emulsion with water and flour/starch further substantially reduces oil splattering during the frying process. Alternatively, the cooking aid of the present invention can be directly added to a food product such as a piece of meat into a heating pan, admixed to the meat and directly fried. This is a very simple, single manipulation step for a consumer which is very convenient, clean and provides the consumer with a good satisfactory result of a coated and fried food product.

### Brief Description of the Drawings

Figure 1: Spider plot comparing product attributes of pan-frying, deep-frying and pan-frying with cooking aid of the present invention during cooking.
Figure 2: Spider plot comparing end cooked product attributes of pan-frying, deep-frying and pan-frying with cooking aid of the present invention.
Figure 3: Statistical Analysis of the DOE results with using different flours and/or starches.

### Detailed Description of the invention

The present invention pertains to a shelf-stable cooking aid for coating and frying a food product, the cooking aid comprising: 25-40 wt% oil, 35-65 wt% water, 10-25 wt% flour and/or starch, an emulsifier; wherein the oil and water are in the form of an emulsion; and wherein the oil is liquid at a room temperature of 25°C. The shelf-stable cooking aid is suitable for coating and frying a food product for example in a cooking pan, and this preferably in one single manipulation step by the cook or consumer. Preferably, the shelf-stable cooking aid is in the form of a paste.

By "shelf-stable" is meant that the said cooking aid can be safely stored at room temperature. Particularly, the cooking aid can be safely stored for at least 6 months, preferably for at least 9 months, more preferably for at least 12 months at a room temperature of 25°C. Within the said shelf-stable period, the cooking aid maintains its organoleptic stability as well as its microbiological safety. During that period the cooking aid remains a paste to serve its described functionality.
By "paste" is meant a soft, smooth viscous mixture which is not form-stable. Preferably, the paste has a viscosity from 20 to 300 Pa.s at a shear rate of 1s⁻¹ at 25°C.
In a preferred embodiment of the present invention, the cooking aid comprises 27-40 wt% oil, more preferably from 28-37 wt% oil, even more preferably from 28-32 wt% oil.

The oil of the present cooking aid is liquid at a room temperature of 25°C, preferably at a room temperature of 22°C.
In a preferred embodiment, the oil is a vegetable oil. Preferably, the oil is an oil selected from the group consisting of palm oil, palm olein, olive oil, corn oil, sunflower oil, rice bran oil, soybean oil and canola oil, or a combination thereof. The advantage of having a vegetable oil in the cooking aid of the present invention is that such vegetable oils are more healthy and more appreciated by consumers than oils originating from many other origins such as milk fat, beef or pork fat.

The cooking aid of the present invention comprises 35-65 wt% water. Preferably, the cooking aid comprises 37-60 wt% water, more preferably, the cooking aid comprises 48-45 wt% water.

In another preferred embodiment of the present invention, the cooking aid comprises 15-23 wt% flour and/or starch. Preferably, the cooking aid of the present invention comprises 15-20 wt% flour and/or starch.

The flours and/or starches advantageously have an amylose content greater than 15% (such as tapioca starch, potato starch), and preferably greater than 25% (such as rice flour, wheat flour, corn flour). Starches may be selected from a group of un-modified and/or modified starches. The modified starches may be from any source, such as corn, waxy maize, tapioca, corn, wheat, potato and rice, and may be chemically-modified, physically-modified, enzymatically-treated, heat-treated, stabilized, cross-linked starch and/or combinations thereof.

Hence, a preferred embodiment pertains to the cooking aid of the present invention comprising flour, wherein the flour is preferably selected from the group consisting of rice flour, wheat flour, corn flour, or a combination thereof.

In another embodiment, the cooking aid of the present invention comprises starch, wherein the starch is selected from the group consisting of un-modified (i.e. natural) corn, rice, potato and/or tapioca starch. In another embodiment, the starch is selected from physical and/or chemical modified potato, corn or tapioca starch.

In one embodiment, the flour and/or the starch of the present cooking aid are in a gelatinized form. "Gelatinized" means that intermolecular hydrogen bonds of the flour and/or starch molecules were broken down in the presence of water and heat, and that the flour/starch granules are in a water swollen state.

In one embodiment, the cooking aid of the present invention comprises 7-23 wt% starch. Preferably it comprises 5-20 wt% dextrin.

Flour and/or starches are responsible for providing a crispy coat to food products and contribute to the viscosity of the resulting paste. Preferably, the cooking aid of the present invention has a viscosity from 20 to 300 Pa.s at a shear rate of 1s⁻¹ at 25°C, measured by using a Rheometer. More preferably, the cooking aid has a viscosity from ca. 30 to 300 Pa.s at a shear rate of 1s⁻¹ at 25°C. Cooking aids with higher viscosities, i.e. a viscosity above ca. 300 Pa.s form dough-like textures, are not preferred for the cooking aid of the present invention. Cooking aids with lower viscosities than ca. 20 Pa.s are not preferred for the present invention as they are too liquid and not enough pasty anymore.

Preferably, the cooking aid of the present invention comprises an emulsifier, wherein the emulsifier is selected from the group consisting of lecithin, polyglycerol-polyricinoleate (PGPR), monoglyceride and mono-diglyceride, or combinations thereof.

Preferably, the emulsifier is present in the cooking aid in an amount of 0.5-3.0 wt%, more preferably in an amount of 1-2 wt%.

The composition of the cooking aid of the present invention may further comprise a suitable organic acid and/or preservative that can help to improve and prolong the shelf-stability of the cooking aid. It is known in the art that food preservation techniques such as pasteurization, increasing acidity and decreasing variable water can limit the growth of microorganisms in foods. Examples of suitable organic acids which can be added to the cooking aid of the present invention are citric acid, lactic acid and/or acetic acid. Suitable preservatives which can be added to the cooking aid of the present invention are potassium sorbate, sodium benzoate and/or antioxidants including e.g. rosemary extract. Preferably, the cooking aid of the present invention has a pH value from 5.4 to 3.5.

The composition of the present cooking aid may also further comprise seasonings including salt, flavouring agents, spices and/or garnishes. The flavouring agents can include coriander, chili, garlic powder, onion powder, turmeric powder, white pepper powder and black pepper powder. The content of such flavouring agents in the cooking aid is preferably from 1.5 to 10 wt% on wet basis.

In a preferred embodiment, the cooking aid of the present invention does not comprise a hydrocolloid. Preferably, the cooking aid does not comprise a hydrocolloid selected from the group consisting of xanthan gum, gum Arabic, guar gum, locust bean gum, carboxymethyl cellulose, alginate, pectin, agar, carrageenan and gelatin, or a combination thereof.

In a general aspect, the cooking aid of the present invention can be made my mixing all the ingredients together, pasteurizing the mixture and then filling the pasteurized paste into packaging containers.

However, a preferred aspect of the present invention pertains to a method for making the shelf-stable cooking aid of the present invention, comprising the steps of:
a) dissolving emulsifier in oil and mixing with water to form an emulsion;
b) mixing the flour and/or starch with water;
c) admixing oil and emulsifier to the mixture of step b) to form a blend;
d) pasteurizing the blend from step c) at a temperature of at least 65°C, preferably at least 75°C, more preferably at least 80°C;
e) mixing the emulsion from step a) with the pasteurized blend from step d) and filling the resulting cooking aid into packaging containers;
wherein the total amount of water from the different method steps adds up to 35-65 wt% of the cooking aid; and wherein the total amount of oil from the different method steps adds up to 25-40 wt% of the cooking aid.

An advantage of the preferred aspect of the method of the present invention is that it results in a more physically stable paste which leads to less separation of oil from the paste over longer storage periods.

Preferably, further ingredients selected from the group consisting of salt, spices, garnishes, or combinations thereof, are added to the mixing in step b).

Still further ingredients selected from the group consisting of organic acids and/or preservatives may be added to the mixing in step c) and/or after the pasteurizing step d).
In a preferred embodiment, the method of the present invention comprises 10-25 wt% of un-gelatinized flour and/or starch in step b). More preferably, the method of the present invention comprises 15-20 wt% of un-gelatinized flour and/or starch in step b).
A further aspect of the present invention relates to a method for coating and frying a food product in one single manipulation step, wherein the food product is brought into contact with and heated together with the cooking aid of the present invention in a heating pan or on a heated surface.
Preferably, the food product is a piece of meat or a vegetable product.

Further advantages and features of the present invention are apparent from the figures and examples.

### Example 1: Determining feasible range of oil, water and flour and/or starch composition for paste formation

Different combinations of oil, flour and/or starch and water were mixed together according to the method for making the shelf-stable cooking aid as described above, in accordance with the amounts as described in Table 1. All samples were emulsified with 1g of lecithin as emulsifier and heated at 90°C for 10 min.

**Table 1. Combinations of oil, flour and/or starch & water**

| **Trial** | **Oil (wt%)** | **Flour and/or starch (wt%)** | **Water (wt%)** | **Result** | **Viscosity (Pa.s) at 25°C and shear rate of 1s⁻¹** |
|---|---|---|---|---|---|
| S01 | 10 | 50 | 40 | Dough | |
| S02 | 10 | 40 | 50 | Dough | |
| S03 | 10 | 30 | 60 | Dough | |
| S04 | 10 | 20 | 70 | Dough | |
| S05 | 10 | 10 | 80 | Dough | |
| S06 | 20 | 50 | 30 | Dough | |
| S07 | 20 | 40 | 40 | Dough | |
| S08 | 20 | 30 | 50 | Dough | |
| S09 | 20 | 20 | 60 | Dough | |
| S10 | 20 | 10 | 70 | Dough | |
| S11 | 25 | 50 | 25 | Dough | |
| S12 | 25 | 40 | 35 | Dough | |
| S13 | 25 | 30 | 45 | Dough-like | 545.92 |
| S14 * | 25 | 25 | 50 | Paste | 268.82 |
| S15 * | 25 | 20 | 55 | Paste | 268.76 |
| S16 * | 25 | 10 | 65 | Paste | |
| S17 | 30 | 50 | 20 | Dough | |
| S18 | 30 | 40 | 30 | Dough | |
| S19 | 30 | 30 | 40 | Dough-like | 350.49 |
| S20 * | 30 | 25 | 45 | Paste | 218.95 |
| S21 * | 30 | 20 | 50 | Paste | 79.82 |
| S22 * | 30 | 10 | 60 | Paste | |
| S23 | 40 | 50 | 10 | Dough | |
| S24 | 40 | 40 | 20 | Dough | |
| S25 | 40 | 30 | 30 | Paste | 108.09 |
| S26 * | 40 | 20 | 40 | Paste | 40.181 |
| S27 * | 40 | 10 | 50 | Paste | 20.04 |

| | | | | | |
|---|---|---|---|---|---|
| *) according to the present invention | | | | | |

The results show that pastes with a viscosity between 20 and 300 Pa.s can be obtained with a combination of oil, water and flour and/or starch in the ranges as follows:
Oil: 25 - 40%
Flour: 10 - 25%
Water: 35 - 65%.

### Example 2: Preparation of a cooking aid

150g of lecithin (Topcithin® NGM from Cargill) was dissolved in 3500g of rice bran oil and mixed using Silverson mixer at 3500rpm for 5 min. 700g of rice flour, 200g of modified starch (Col-flo® 67 from Ingredion), 1000g of modified starch (National™ DC from Ingredion), 410g of a seasoning mix, 70g of lactic acid (88% concentration), 10g of potassium sorbate and 3960g of water were then mixed into the oil mixture. The mixture was then pasteurized in the Guisti Tank and held at 92°C for 10min, stirring at speed 5. The pH of the cooking aid was 3.88. It was then filled into glass jars.

The composition of the cooking aid is as follows:

| | |
|---|---|
| Water | 39.6% |
| Rice Bran Oil | 35.0% |
| National™ DC | 10.0% |
| Rice Flour | 7.0% |
| Col-flo® 67 | 2.0% |
| Topcithin® NGM | 1.5% |
| Lactic acid (88%) | 0.7% |
| Mixture of herbs | 4.1% |
| Potassium Sorbate | 0.1% |

### Example 3: Preparation of a further cooking aid

Stream 1: 49.7g of lecithin (Emulfulid ex. Cargill) is dissolved in 980g of sunflower oil and mixed with 1455.5g of water. This mixture is then passed through a Gaulin Homogenizer at 140bar for 2min.

Stream 2: 105g of lecithin (Emulfulid ex. Cargill) is dissolved in 1260.1g of sunflower oil and mixed using Silverson mixer at 3500rpm for 5min.

1190.1g of rice flour, 434g of salt, 94.5g of herbs and spices, and 1409.9g of water were mixed and then added to the mixture of Stream 2. The whole mixture is stirred in a Guisti Tank at 0.5 bar steam pressure at speed 5. The mixture is heated and held at 90°C for 10 min.

The emulsion from Stream 1 is then added to the pasteurized mixture from Stream 2 and stirred till homogeneous. 14g of lactic acid (80%) and 7g of potassium sorbate are then added and the mixture is stirred again till homogeneous. The pH of the cooking aid was 4.49. The resulting paste was then filled into glass jars.

The composition of the cooking aid is as follows:

| | |
|---|---|
| Water | 40.9% |
| Sunflower Oil | 32.0% |
| Rice Flour | 17.0% |
| Salt | 6.2% |
| Lecithin | 2.2% |
| Herbs & spices | 1.4% |
| Lactic Acid | 0.2% |
| Potassium sorbate | 0.1% |

### Example 4: Sensorial evaluation of cooking aid, in comparison to deep-frying and pan-frying

The cooking aid as per example 2 was evaluated for its functionality during cooking and for the end/cooked product characteristics in comparison to pan-frying and deep-frying (see Tables 2 & 3 for results). 7 internal panellists were used to rate the products.

**Table 2. Description of different frying methods**

| **Frying Mode** | **Pan-frying chicken** | **Deep-frying chicken with wet batter** | **Pan-frying chicken with cooking aid** |
|---|---|---|---|
| Ingredients | 80g chicken thigh 10g corn oil | 80g chicken thigh Sufficient oil to submerge chicken | 80g chicken thigh 20g cooking aid |
| Before cooking | - | Coat chicken with traditional wet batter (80g wheat flour + 20g corn flour + 175g water) | Coat chicken with cooking aid. |
| Cooking Procedure | -Heat the oil on a heated pan. -Pan fry chicken for 4 minutes on each side (8 mins. total) | -Fill a pan with oil and heat the oil till 180°C. -Fry the coated chicken for 8 minutes. | -On a heated pan, pan-fry the coated chicken for 4 minutes on each side (8 mins. total) |

**Table 3. List of attributes evaluated**

| | **Attributes** | **Description** |
|---|---|---|
| Product Functionality | Oil splattering | Intensity of oil that splatters out of the pan |
| | Resides (stuck) on pan | Amount of observed residues left on the pan after frying |
| | Oil smell from smoke | Degree of oily smell during frying |
| | Smoky | Degree of smoke generated during frying |
| End/cooked product attributes | Colour | Evenness of surface colour |
| | Oily appearance | Amount of oil on the surface of the chicken |
| | Adherence to coating | Adhesiveness of the coating on the chicken |
| | Fried taste | Intensity of fried note |
| | Chicken taste | Intensity of taste sensation associated with raw lean chicken meat |
| | Flavourful | Overall flavourful taste of the chicken |
| | Crispiness/Crispy | Intensity of firm but easily broken coating when you bite on the chicken |
| | Juiciness of meat/ Juicy | Degree of succulent (fleshy, moist) of chicken meat |
| | Oily mouthfeel | Oily feeling in your mouth and palate when you bite on the chicken |

Sensory scale used to evaluate samples

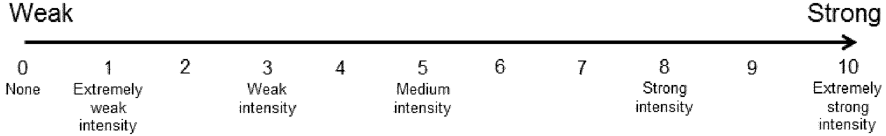

### Results:

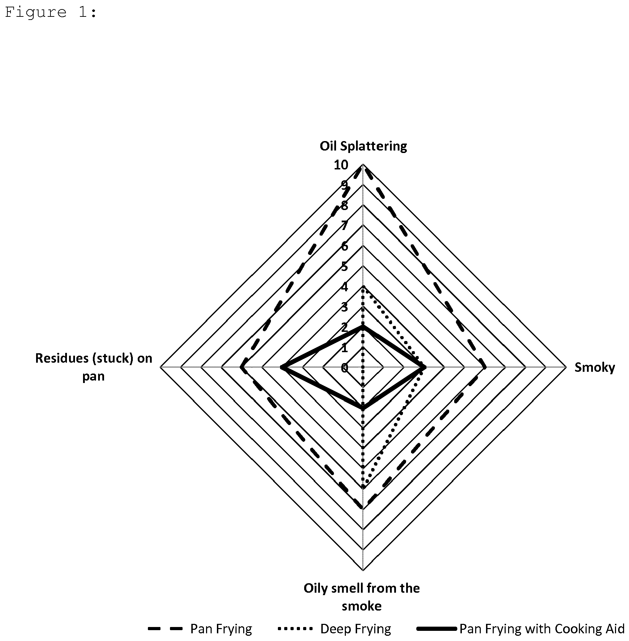

In terms of product functionality during cooking, the cooking aid provided a more superior cooking experience compared to pan and deep-frying. The results showed that the cooking aid had less oil splattering, was less smoky, had less oil smell than pan-frying and deep-frying. Furthermore, it had less residues stuck on the pan than deep-frying (Figure 1).

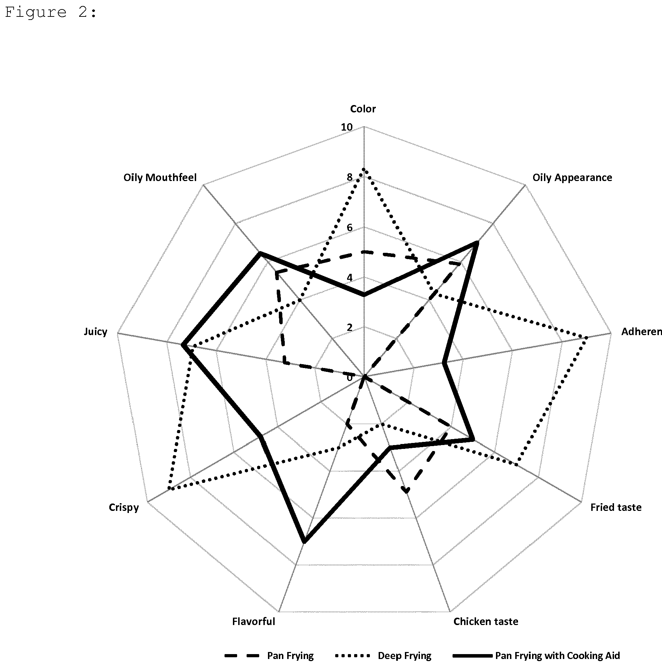

In terms of end product attributes, the cooking aid gave cooked chicken a more fried taste and a more crispy coating than pan-frying, and was superior in providing a juicy and flavourful chicken compared to pan-frying and deep-frying (Figure 2).

### Example 5: Sensorial evaluation of the cooking aid prepared with different combinations of flours and/or starches, according to the ranges defined in Example 1.

Monadic profiling was used to evaluate 12 different combinations of oil, flour and/or starch and water based on the ranges determined in example 1, following a design of experiment (DOE) as shown in Table 4.

**Table 4: Experimental design of feasible range of oil, flour and/or starch and water composition**

| **Trial** | **Oil (%)** | **Water (%)** | **Rice Flour (%)** | **Wheat Flour (%)** | **Corn Flour (%)** | **Mod. Corn starch (%)** | **Mod. Amylose corn starch (%)** | **Total flour and/or starches (%)** |
|---|---|---|---|---|---|---|---|---|
| T01 | 40 | 50 | 3.33 | 3.33 | 3.33 | 0.00 | 0.00 | 10.0 |
| T02 | 40 | 50 | 3.33 | 0.00 | 0.00 | 3.33 | 3.33 | 10.0 |
| T03 | 40 | 35 | 0.00 | 12.50 | 0.00 | 0.00 | 12.50 | 25.0 |
| T04 | 40 | 35 | 0.00 | 0.00 | 12.50 | 12.50 | 0.00 | 25.0 |
| T05 | 25 | 60 | 0.00 | 0.00 | 7.50 | 0.00 | 7.50 | 15.0 |
| T06 | 25 | 60 | 0.00 | 7.50 | 0.00 | 7.50 | 0.00 | 15.0 |
| T07 | 25 | 50 | 25.00 | 0.00 | 0.00 | 0.00 | 0.00 | 25.0 |
| T08 | 25 | 50 | 5.00 | 5.00 | 5.00 | 5.00 | 5.00 | 25.0 |
| T09 | 25 | 57.5 | 5.83 | 5.83 | 5.83 | 0.00 | 0.00 | 17.5 |
| T10 | 25 | 57.5 | 0.00 | 8.75 | 8.75 | 0.00 | 0.00 | 17.5 |
| T11 | 25 | 57.5 | 8.75 | 0.00 | 8.75 | 0.00 | 0.00 | 17.5 |
| T12 | 25 | 57.5 | 8.75 | 8.75 | 0.00 | 0.00 | 0.00 | 17.5 |

A group of 6 trained panellists were used to describe and rate pan-fried chicken breasts cooked using the 12 samples above. Cooked products were rated on the intensity for each descriptor shown in Table 5. Statistical analysis was then performed using SAS software.

**Table 5. Glossary terms used in Monadic Profiling**

| **Attributes** | **Description** |
|---|---|
| Crispiness/Crispy texture | Intensity of firm but easily broken coating when you bite on the chicken |
| Flavourful/Tasty | Overall flavourful taste of the cooked product |
| Juiciness of meat/Juicy texture | Degree of succulent (fleshy, moist) of chicken meat |

Sensory scale used to evaluate samples

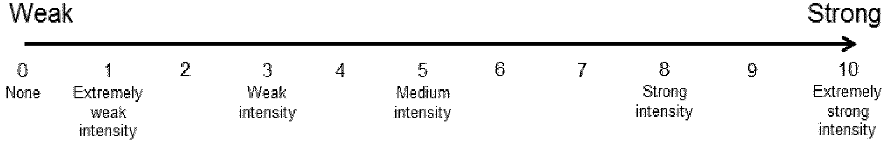

Results from the sensory evaluation showed that all 12 samples within the defined range delivered flavourful, juicy chicken with a crispy coating of scores greater than 5 (> moderate intensity) (Table 6). The DOE results showed that different combinations of flours and/or starches, within the defined ranges of oil, water and flours and/or starches allow the delivery of a cooked product with a crispy coat.

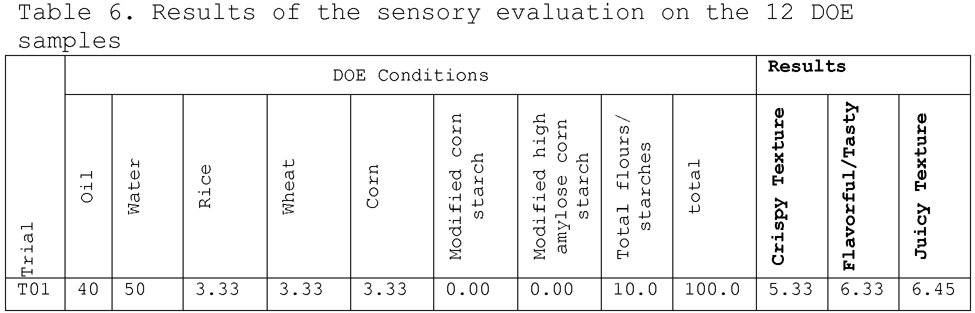

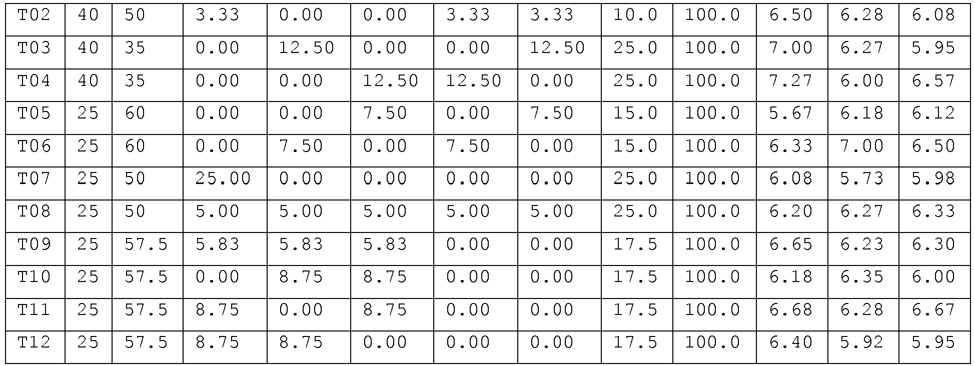

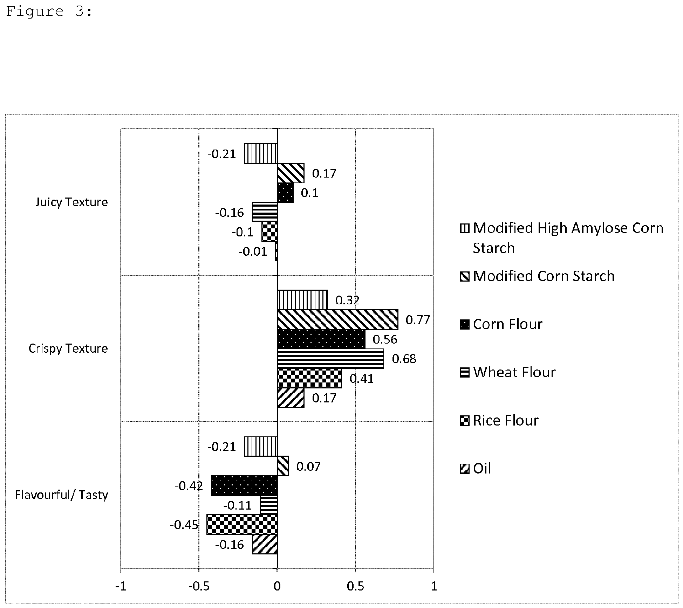

Based on statistical analysis conducted using SAS software, the results showed that all combinations/types of flours and/or starch have a significant positive impact on crispy texture. However, the use of modified corn starch, wheat flour and corn flour is significantly better in providing crispness. For juicy texture, only modified corn starch and corn flour have a significant positive impact. On the other hand, only modified corn starch plays a significant role in providing a flavourful/ tasty end product. The results are summarized in Figure 3.

### Example 6: Preparation of cooking aid with dextrin as modified starch

5.1g of lecithin (Emulfluid® NGM from Cargill) was dissolved in 78g of canola oil and mixed using Thermomix at speed 6 for 1 min. 75g of dextrin (Crystal Tex™ 626 from Ingredion), 18.6g of salt, 0.42g of lactic acid (80% concentration), 5.1g of acetic acid (10% concentration) and 117.78g of water are then mixed into the oil mixture. The mixture was then pasteurized and held at 90°C for 10min with gentle stirring.
The pH of the cooking aid was 4.19.

The composition of the cooking aid is as follows:

| | |
|---|---|
| Water | 39.26% |
| Canola Oil | 26% |
| Crystal Tex™ 626 | 25% |
| Salt | 6.2% |
| Emulfluid® NGM | 1.7% |
| Acetic acid (10%) | 1.7% |
| Lactic acid (88%) | 0.14% |

### Example 7: One-step frying on a heating pan

20g of the said cooking aids as per examples 2 and 6 were directly dosed onto a heated non-stick pan. 90g of skinless and boneless chicken breast was placed on top of the cooking aid for pan-frying. Once a crust was formed on the underside of the chicken breast, it was flipped over so that the other side can be coated with the remaining cooking aid in the pan. Both sides of the chicken breast were pan-fried till golden brown with a thin crust for a total of 15 min, depending on the thickness of the meat.

The resulted pan-fried chicken breast had a seasoned and golden brown thin crust on the surface which is associated with fried foods, delivered through a one-step frying process.

### Example 8: Preparation of cooking aid according to the present invention with an instant starch

9g of lecithin (Topcithin® SF from Cargill) was dissolved in 90g of sunflower oil and mixed using Thermomix at speed 3-4 for 4 min. 3.75g of herbs and spices, 33g of gelatinized instant starch (Novation® Prima 340 from Ingredion) and 18.6g of salt were added and mixed at speed 3-4 for 1 min. 133.95g of water and 11.7g of organic acids were added last and mixed at speed 3-4 for 1 min.

The composition of the cooking aid is as follows:

| | |
|---|---|
| Water | 44.65% |
| Sunflower Oil | 30% |
| Instant starch | 11% |
| Salt | 6.2% |
| Organic acids | 3.9% |
| Lecithin | 3% |
| Herbs & spices | 1.25% |

## Claims

1. A shelf-stable cooking aid for coating and frying a food product, the cooking aid comprising: 25-40 wt% oil, 35-65 wt% water, 10-25 wt% flour and/or starch, an emulsifier; wherein the oil and water are in the form of an emulsion; and wherein the oil is liquid at a room temperature of 25°C.

2. The cooking aid according to claim 1, wherein the cooking aid is in the form of a paste.

3. The cooking aid according to claim 1 or 2, wherein the flour and/or starch are in gelatinized form.

4. The cooking aid according to one of the claims 1-3,
wherein the oil is a vegetable oil, preferably selected from the group consisting of palm oil, palm olein, olive oil, corn oil, sunflower oil, rice bran oil, soybean oil and canola oil, or a combination thereof.

5. The cooking aid according to one of the claims 1-4,
wherein the flour is selected from the group consisting of rice flour, wheat flour, corn flour, or a combination thereof.

6. The cooking aid according to one of the claims 1-5,
wherein the starch is selected from the group consisting of tapioca starch, potato starch, corn starch, waxy maize starch, rice starch, or a combination thereof.

7. The cooking aid according to one of the claims 1-6,
wherein the cooking aid has a pH from 5.4 to 3.5.

8. The cooking aid according to one of the claims 1-7,
wherein the emulsifier is selected from the group consisting of lecithin, polyglycerol-polyricinoleate (PGPR), monoglyceride and mono-diglyceride, or a combination thereof.

9. Method for making a shelf-stable cooking aid according to one of the claims 1-8, comprising the steps of:
a) dissolving emulsifier in oil and mixing with water to form an emulsion;
b) mixing the flour and/or starch with water;
c) admixing oil and emulsifier to the mixture of step b) to form a blend;
d) pasteurizing the blend from step c) at a temperature of at least 65°C, preferably at least 75°C, more preferably at least 80°C;
e) mixing the emulsion from step a) with the pasteurized blend from step d) and filling the resulting cooking aid into packaging containers;
wherein the total amount of water from the different method steps adds up to 35-65 wt% of the cooking aid; and wherein the total amount of oil from the different method steps adds up to 25-40 wt% of the cooking aid.

10. The method according to claim 9, wherein further ingredients selected from the group consisting of salt, spices, garnishes, or combinations thereof, are added to the mixing in step b).

11. The method according to claim 9 or 10, wherein further ingredients selected from the group consisting of organic acids and/or preservatives are added to the mixing in step c) and/or after the pasteurizing step d).

12. The method according to one of the claims 9-11, comprising 10-25 wt% of un-gelatinized flour and/or starch in step b).

13. Method for coating and frying a food product in one single manipulation step, wherein the food product is brought into contact with and heated together with the cooking aid according to one of the claims 1-8 in a heating pan or on a heated surface.

14. The method according to claim 13, wherein the food product is a piece of meat or a vegetable product.

## Patentansprüche

1. Lagerstabile Kochhilfe zum Panieren und Braten eines Lebensmittelprodukts, wobei die Kochhilfe Folgendes umfasst: 25-40 Gew.-% Öl, 35-65 Gew.-% Wasser, 10-25 Gew.-% Mehl und/oder Stärke, einen Emulgator; wobei das Öl und Wasser in Form einer Emulsion vorliegen; und wobei das Öl bei einer Raumtemperatur von 25 °C flüssig ist.

2. Kochhilfe nach Anspruch 1, wobei die Kochhilfe in Form einer Paste vorliegt.

3. Kochhilfe nach Anspruch 1 oder 2, wobei das Mehl und/oder die Stärke in gelierter Form vorliegen.

4. Kochhilfe nach einem der Ansprüche 1-3, wobei das Öl ein Pflanzenöl ist, vorzugsweise ausgewählt aus der Gruppe bestehend aus Palmöl, Palm-Olein, Olivenöl, Maisöl, Sonnenblumenöl, Reiskleieöl, Sojaöl und Rapsöl oder einer Kombination davon.

5. Kochhilfe nach einem der Ansprüche 1-4, wobei das Mehl ausgewählt ist aus der Gruppe bestehend aus Reismehl, Weizenmehl, Maismehl oder einer Kombination davon.

6. Kochhilfe nach einem der Ansprüche 1-5, wobei die Stärke ausgewählt ist aus der Gruppe bestehend aus Tapiokastärke, Kartoffelstärke, Maisstärke, Wachsmaisstärke, Reisstärke oder einer Kombination davon.

7. Kochhilfe nach einem der Ansprüche 1-6, wobei die Kochhilfe einen pH-Wert von 5,4 bis 3,5 aufweist.

8. Kochhilfe nach einem der Ansprüche 1-7, wobei der Emulgator ausgewählt ist aus der Gruppe bestehend aus Lecithin, Polyglycerin-Polyricinoleat (PGPR), Monoglycerid und Monodiglycerid oder einer Kombination davon.

9. Verfahren zum Herstellen einer lagerstabilen Kochhilfe nach einem der Ansprüche 1-8, das die folgenden Schritte umfasst:
a) Lösen des Emulgators in Öl und Mischen mit Wasser unter Bildung einer Emulsion;
b) Mischen des Mehls und/oder der Stärke mit Wasser;
c) Beimengen von Öl und Emulgator zur Mischung aus Schritt b), um ein Gemisch zu bilden;
d) Pasteurisieren des Gemischs aus Schritt c) bei einer Temperatur von mindestens 65 °C, vorzugsweise mindestens 75 °C, stärker bevorzugt bei mindestens 80 °C;
e) Mischen der Emulsion aus Schritt a) mit dem pasteurisierten Gemisch aus Schritt d) und Füllen der resultierenden Kochhilfe in Verpackungsbehälter;
wobei die Gesamtmenge an Wasser aus den verschiedenen Verfahrensschritten bis zu 35-65 Gew.-% der Kochhilfe beträgt und wobei die Gesamtmenge an Öl aus den verschiedenen Verfahrensschritten 25-40 Gew. -% der Kochhilfe beträgt.

10. Verfahren nach Anspruch 9, wobei weitere Bestandteile, ausgewählt aus der Gruppe bestehend aus Salz, Gewürzen, Garnierungen oder Kombinationen davon zu der Mischung in Schritt b) gegeben werden.

11. Verfahren nach Anspruch 9 oder 10, wobei weitere Bestandteile, ausgewählt aus der Gruppe bestehend aus organischen Säuren und/oder Konservierungsmitteln zu der Mischung in Schritt c) und/oder nach der Pasteurisierung in Schritt d) gegeben werden.

12. Verfahren nach einem der Ansprüche 9-11, umfassend 10-25 Gew.-% von nicht geliertem Mehl und/oder Stärke in Schritt b).

13. Verfahren zum Panieren und Braten eines Lebensmittelproduktes in einem einzigen Handhabungsschritt, wobei das Lebensmittelprodukt mit der Kochhilfe nach einem der Ansprüche 1-8 in einer Heizpfanne oder auf einer beheizten Oberfläche in Kontakt gebracht und zusammen mit dieser erwärmt wird.

14. Verfahren nach Anspruch 13, wobei das Lebensmittelprodukt ein Stück Fleisch oder ein Pflanzenprodukt ist.

## Revendications

1. Aide culinaire longue conservation permettant d'enrober et de frire un produit alimentaire, l'aide culinaire comprenant : 25 à 40 % en poids d'huile, 35 à 65 % en poids d'eau, 10 à 25 % en poids de farine et/ou d'amidon, un émulsifiant ; dans lequel l'huile et l'eau sont sous la forme d'une émulsion ; et dans lequel l'huile est liquide à une température ambiante de 25 °C.

2. Aide culinaire selon la revendication 1, l'aide culinaire se présentant sous la forme d'une pâte.

3. Aide culinaire selon la revendication 1 ou la revendication 2, dans lequel la farine et/ou l'amidon sont sous forme gélatinisée.

4. Aide culinaire selon l'une des revendications 1 à 3, dans lequel l'huile est une huile végétale, préférablement choisie dans le groupe constitué par l'huile de palme, l'oléine de palme, l'huile d'olive, l'huile de maïs, l'huile de tournesol, l'huile de son de riz, l'huile de soja et l'huile de colza ou une combinaison de celles-ci.

5. Aide culinaire selon l'une des revendications 1 à 4, dans lequel la farine est choisie dans le groupe constitué par la farine de riz, la farine de blé, la farine de maïs ou une combinaison de celles-ci.

6. Aide culinaire selon l'une des revendications 1 à 5, dans lequel l'amidon est choisi dans le groupe constitué par l'amidon de tapioca, l'amidon de pomme de terre, l'amidon de maïs, l'amidon de maïs cireux, l'amidon de riz ou une combinaison de ceux-ci.

7. Aide culinaire selon l'une des revendications 1 à 6, dans lequel l'aide culinaire a un pH allant de 5,4 à 3,5.

8. Aide culinaire selon l'une des revendications 1 à 7, dans lequel l'émulsifiant est choisi dans le groupe constitué par la lécithine, le polyglycérol-polyricinoléate (PGPR), un monoglycéride et un monodiglycéride ou une combinaison de ceux-ci.

9. Procédé de fabrication d'un aide culinaire longue conservation selon l'une des revendications 1 à 8, comprenant les étapes consistant à :
a) dissoudre un émulsifiant dans de l'huile et mélanger avec de l'eau pour former une émulsion ;
b) mélanger la farine et/ou l'amidon avec de l'eau ;
c) ajouter par mélange de l'huile et un émulsifiant au mélange de l'étape b) afin de former un mélange ;
d) pasteuriser le mélange de l'étape c) à une température d'au moins 65 °C, préférablement d'au moins 75 °C, plus préférablement d'au moins 80 °C ;
e) mélanger l'émulsion de l'étape a) avec le mélange pasteurisé de l'étape d) et remplir des récipients d'emballage avec l'aide culinaire résultant ;
dans lequel la quantité totale d'eau des différentes étapes de procédé totalise de 35 à 65 % en poids de l'aide culinaire ; et dans lequel la quantité totale d'huile des différentes étapes de procédé totalise de 25 à 40 % en poids de l'aide culinaire.

10. Procédé selon la revendication 9, dans lequel d'autres ingrédients choisis dans le groupe constitué par le sel, les épices, les garnitures ou leurs combinaisons, sont ajoutés au mélange à l'étape b).

11. Procédé selon la revendication 9 ou la revendication 10, dans lequel d'autres ingrédients choisis dans le groupe constitué par les acides organiques et/ou les conservateurs sont ajoutés au mélange à l'étape c) et/ou après l'étape de pasteurisation d).

12. Procédé selon l'une des revendications 9 à 11, comprenant 10 à 25 % en poids de farine et/ou d'amidon non gélatinisés à l'étape b).

13. Procédé pour enrober et frire un produit alimentaire en une seule étape de manipulation, dans lequel le produit alimentaire est amené en contact et chauffé avec l'aide culinaire selon l'une des revendications 1 à 8 dans une casserole chauffée ou sur une surface chauffée.

14. Procédé selon la revendication 13, dans lequel le produit alimentaire est un morceau de viande ou un produit végétal.
